# EUROPEAN PATENT APPLICATION

(11) **EP 4 779 615 A1**
(43) Date of publication of application: **22.07.2026**
(21) Application number: 24864817.2
(22) Date of filing: 12.09.2024
(51) Int. Cl.: G09B 25/02, B05D 1/02, G09B 19/24, G06T 19/20

(54) **METHOD AND SYSTEM FOR SIMULATING SPRAY-PAINTING OPERATIONS IN VIRTUAL REALITY, AUGMENTED REALITY OR MIXED REALITY ENVIRONMENTS**

(30) Priority: 12.09.2023 ES 202330767
(71) Applicant: Seabery Soluciones, S.L., 21005 Huelva (ES)
(72) Inventor: MARQUÍNEZ TORRECILLA, Pedro, Severna Park, Maryland 21146 (US); GARRIDO JURADO, Sergio, 14014 Córdoba (ES); GUNIA, Pavel, 21459 Huelva (ES); CHICA BARRERA, Juan José, 21710 Bollullos Par del Condado (Huelva) (ES)
(74) Representative: TRBL Intellectual Property
(86) International application number: PCT/ES2024/070556
(87) International publication number: WO 2025/056827

(57) **Abstract**

The present invention mainly relates to a method for simulating spray-painting operations that is suitable for calculating paint projection surfaces (12) on a simulated workpiece (1), based on the position and orientation of a physical workpiece (1') and a physical tool (2'); and for determining the shape and volume of a paint coating (4) based on input paint parameters, wherein said shape and said volume are calculated as functions of depositing paint material on one or more accumulation regions (13) of the paint projection surfaces (12) which, for the applied layers (3) as a whole, form the paint coating (4). The invention further relates to a simulation system comprising means that are configured to implement the described method and to a corresponding computer program.

## Description

### FIELD OF THE INVENTION

The present invention relates, in general, to the field of learning by means of augmented reality techniques and, more specifically, to methods and to systems for simulating painting operations using a computer, for example for simulating spray-painting techniques, applying abrasive material flow on a surface, applying protective surface treatments or, in general, dispersing fluid materials by pressure on surfaces of any type, preferably by means of augmented reality methods. In the scope of the present invention, the term "augmented reality" will be understood to furthermore refer to any other visual representation techniques by means of virtual reality or by means of mixed reality. Likewise, although the present invention relates, in general, to paint as the preferred material for dispersion and/or spraying, this term will be understood, within the scope of interpretation of the invention, to mean any particulate, fluid and/or viscous material which can be dispersed or sprayed by pressure on a surface, forming a coating and/or modifying the nature of said surface, either permanently or temporarily. Examples of use of said materials are, for example, liquids, resins, foams, varnishes, or particulate materials such as silica, glass, metals or plastics. Lastly, the term spraying will be understood, within the scope of interpretation of the invention, as any technique of projection, dispersion or impulsion of the aforementioned materials by means of pressure.

### BACKGROUND OF THE INVENTION

Known systems and methods for simulating spray-painting operations by material deposition require intensive use of graphics processing resources to perform the simulations. Thus, in conventional painting simulation systems, the calculations and representation of the simulated paint coating (i.e., the accumulation of paint material deposited on the interface of the painted surfaces) require considerable computational power. This effectively limits the performance of the equipment on which said simulation can be implemented, generally being limited to computers with dedicated graphics processing units. By way of example, mobile devices and/or web browsers normally do not allow for the implementation of conventional painting simulation techniques. Furthermore, said conventional systems and methods are technically cumbersome to implement and present difficulties for the development of new characteristics and functionalities, such as the implementation of complex paint patterns and/or the simulation of different materials or specific painting techniques, for example, low-pressure spray painting or airless spray painting.

**In** known painting simulation techniques, the amount of paint material transferred from the painting tool used (e.g., a compressed air paint gun) to the paint coating on the workpiece cannot be modelled with high accuracy, as a consequence of the aforementioned computational limitations. However, obtaining an accurate modelling of the paint coating is crucial in this field to realistically simulate the successive layers of deposited material performed in each painting operation.

With the aim of improving conventional painting simulation techniques, several solutions have been developed in recent years to partially reduce the computational requirements of the simulation operations, while maintaining realistic and even photorealistic display results, obtaining simulation images that are comparable to the results of a real painting. An example of these techniques is described in patent application US 2013/0323695 A1 and patent US 10,909,876 B2. These documents describe different methods for simulating a paint coating by rendering a plurality of droplets, the accumulation of which forms a layer of paint on a projection area. Although this type of technology allows satisfactory simulation results to be obtained in terms of realism for simple painting operations, its implementation is still too demanding in terms of the computational resources required for more complex cases. In practice, this severely limits the scalability of this equipment.

As a result of the recent improvement in painting operation simulation techniques, it would be desirable to develop methods for the realistic calculation of the properties of the paint coating, which can be simulated for different types of tools used (paint spray guns, robotic arms, etc.) and which have improved performance compared to known techniques. Having these indicators is of great value in the field of training and learning technologies for painting skills since, with this, the people who are learning, as well as their teachers, can obtain precise quantitative information about the quality of a given painting operation. Moreover, in the field of robotic painting, this capability would make it possible to refine the learning methods of painting robots.

It is important to clarify that, to date, there are no mature techniques for adequately calculating the formation patterns of simulated paint coatings based on dynamic painting parameters (fan opening, air/paint flow, pressure, etc.), which are also feasible in terms of demand for computational resources. Thus, the only realistic alternative to this possibility, which in the prior art is mostly based on particle rendering, is to perform real painting tests, which requires the consumption of significant material resources, mainly in the form of pieces and paint material, with the consequent environmental impact, and entails a higher risk of accidents for less experienced users, which also necessarily imposes a greater need for human supervision.

In this context, obtaining the aforementioned methods for simulating realistic and scalable properties would also be very valuable in order to be able to simulate a wide variety of painting tests using advanced techniques. Again, obtaining realistic information on these properties through simulation, without the need to render individual particles or droplets, would represent significant savings in resources (both computational and material or energy consumption), with the corresponding improvement in terms of performance and with a high benefit in terms of safety and environmental impact.

Furthermore, having techniques for simulating calculation of realistic properties of advanced paint pattern formation can also be highly beneficial in real painting operations. Thus, realistic simulation of the properties of a simulated paint coating, based on the characteristics of a real coating, can advantageously replace traditional techniques that have a high cost and need for specialisation.

The present invention is aimed at solving the foregoing problems and limitations by means of a novel method for simulating spray-painting operations, together with a computer program and a system that implements said method.

### BRIEF DESCRIPTION OF THE INVENTION

The object of the method and the system of the invention is preferably the simulation of painting operations, preferably the simulation of spray-painting techniques, or of protective surface treatment techniques with spraying (in which a paint material or any other coating material is deposited on the surface of an object), as represented and described, respectively, in relation to the description, figures and claims herein.

More specifically, a first object of the invention generally relates to a method and to a system adapted to provide a simulation environment by means of augmented reality, comprising hardware/software means adapted to support the calculation, rendering and display of preferably three-dimensional (3D) graphics, as well as communication means between users of simulation software, together with an implementation of mathematical methods and/or algorithms simulating 3D painting processes.

The method and the system of the invention are implemented, in a preferred embodiment thereof, by means of software that can be used, for example, to manage a virtual classroom intended for learning painting techniques, and for applying augmented reality that simulates a painting process in a real environment. Thus, by means of using augmented reality techniques, the computer-generated virtual images corresponding to the painting operations are superimposed or transposed onto real environments to define and/or create an augmented, virtual or mixed reality that provides users with a tool for learning different painting techniques. In some examples of the invention, the user (for example, a painter or an apprentice) uses a screen, video glasses and/or any other display device adapted for that purpose. The screen or the glasses can, in turn, be integrated into a commercial painting mask and present the mixed reality to a user who is using the painting mask. In this way, a realistic simulation of real painting conditions is achieved.

While the present invention usually refers to operations performed by a user, said user will be understood, generically, to be not only as a human user, but also as any robotic element performing or testing the painting operations.

The embodiments of the systems and methods described as an example of the invention preferably provide a simulated visual representation of painting workpieces. However, in the scope of the invention, said workpieces will be understood to be any real or simulated elements that comprise the regions on which the paint is deposited. Thus, for example, a workpiece can be understood to be an industrial part, a vehicle, a constructive element, or a real or simulated engineering element on which the painting operation is to be performed.

Moreover, the paint coatings obtained with the simulation method and system of the invention realistically represent the typical surface depositions of paint material, in one or more layers, depending on the type of painting operation performed. In different embodiments of the invention, said method and system can be used to realistically reproduce the generation of defects in the paint coating, such that a user can see them and better understand how and why they have occurred, learning to avoid them in successive operations. In other embodiments, the systems and methods of the invention can distinguish between different techniques used to form a paint coating and represent it, realistically, in different formats in the display means chosen to represent the simulation.

In relation to the conventional simulation of painting operations, the systems and methods described by the invention allow correctly calculating the amount of material transferred from a painting tool to a workpiece, adjusting the geometry of the to improve the accuracy of the interaction between different layers, improving the representation of the paint coating formed. Compared to known methods and systems, the invention furthermore allows the realistic calculation of the paint accumulation regions on the surface of the workpiece, based on the flow of compressed air used, and/or the paint itself sprayed from the simulated painting tool. Said accumulation regions can be shown to the user in detail throughout the steps of forming the coating, for each successive layer of deposited paint material. This improved capability cannot be obtained in real painting operations because in such operations, the paint coating is formed in a non-reversible manner as the successive layers of material are deposited on top of one another.

More specifically, a first object of the invention relates to a method for simulating a spray-painting operation, wherein said painting operation represents the application of one or more layers of paint material on a physical workpiece, and wherein said layers of paint material form a paint coating;
wherein said method comprises the operation of:
   - a physical tool operable by a user;
   - at least one position detector, adapted to receive information corresponding to the position and orientation of the physical workpiece and/or the physical tool; and
   - simulation equipment communicatively connected to the physical tool and to the position detector, said connection being understood to be any means that allow the exchange of information between these elements, or a subset thereof, and may be produced by a physical medium or wirelessly;
wherein said simulation equipment is adapted with hardware and software means comprising a paint parameter configurer, a paint spray calculator, a renderer and a display;
wherein said method comprises performing the following steps:
   - obtaining, with the position detector, information corresponding to the spatial location of the physical workpiece and the physical tool, and sending this spatial location information to the simulation equipment;
   - calculating, with the position detector and/or the simulation equipment, the position and orientation of the physical workpiece and the physical tool from the information obtained by the position detector;
   - establishing, with the paint parameter configurer, one or more input parameters that characterise a painting operation for one or more layers of paint material, wherein said input parameters comprise at least one of the following: composition of the deposited paint material, type of painting process, paint and/or air outlet flow, outlet fan opening of the deposited paint;
   - rendering, with the renderer, at least one simulation domain in which a simulated workpiece and a simulated painting tool representing, respectively, the physical workpiece and the physical tool are represented within a three-dimensional painting space.

Advantageously, the method of the invention further comprises the following steps, performed in their entirety or as a selection thereof, in any technically possible combination or order:
- calculating, with the paint spray calculator, a paint projection surface on the simulated workpiece, based on the position and orientation of the physical workpiece and the physical tool, as well as based on the input parameters for each layer, wherein said paint projection surface is also configured as one or more paint accumulation regions, wherein said accumulation regions are determined, with the paint spray calculator, based on the paint and/or air output flow established with the paint parameter configurer;
- determining, with the paint spray calculator, the shape and volume of the paint coating based on the input paint parameters, wherein said shape and said volume are calculated as functions of depositing paint material on the one or more accumulation regions of the paint projection surface which, for the applied layers as a whole, form the paint coating;
- rendering, with the renderer, the paint coating in the simulation domain;
- representing, with the display, the simulated workpiece, the simulated painting tool and the rendered paint coating.

In a preferred embodiment of the method of the invention, in the step of determining, with the paint spray calculator, the shape and volume of the paint coating based on the input parameters, the functions of depositing paint material are globally or locally decreasing functions based on the centres of the paint accumulation regions.

In another preferred embodiment of the invention, the step of determining, with the paint spray calculator, the shape and volume of the paint coating based on the input parameters, for each of the layers of paint material, comprises generating one or more paint dispersion patterns.

In another preferred embodiment of the invention, the step of determining, with the paint spray calculator, the shape and volume of the paint coating based on the input parameters for each of the layers of paint material comprises generating one or more roughness, drip and/or displacement patterns of paint deposited on the simulated workpiece.

In another preferred embodiment of the invention, the step of determining, with the paint spray calculator, the shape and volume of the paint coating based on the input parameters for each of the layers of paint material comprises calculating one or more indicators relating to the properties of the paint deposited on the simulated workpiece, said indicators also comprising one or more of the following: time used during the painting operation, efficiency of the transfer of deposited material, consumption of paint material, presence of defects.

In another preferred embodiment of the invention, the step of calculating, with the paint spray calculator, a paint projection surface on the simulated workpiece, based on the position and orientation of the physical workpiece and the physical tool comprises correcting the shape and/or position of said projection surface by the effect of gravity, by the effect of turbulence, by the effect of resistance or drag of air molecules, by the effect of temperature and/or ambient humidity, and/or by acceleration due to an air flow in one or more directions in the three-dimensional space.

In another preferred embodiment of the invention, the step of calculating, with the paint spray calculator, a paint projection surface on the simulated workpiece, based on the position and orientation of the physical workpiece and the physical tool comprises one or more corrections determined on the basis of the shape of the simulated workpiece. More preferably, the corrections determined on the basis of the shape of the simulated workpiece comprise determining one or more occlusion regions in the simulated workpiece.

In another preferred embodiment of the invention, the step of calculating, with the paint spray calculator, a paint projection surface on the simulated workpiece, based on the position and orientation of the physical workpiece and the physical tool comprises determining one or more occlusion regions on the simulated workpiece due to the existence of one or more virtual objects arranged between the simulated workpiece and the simulated painting tool and/or due to the presence of occlusive elements existing on the workpiece itself.

In another preferred embodiment of the invention, the simulation method further comprises performing, with the parametriser, a step of parameterising one or more surfaces of the simulated workpiece, wherein said parameterisation comprises mapping a data matrix along said surfaces of the simulated workpiece, and wherein said data matrix comprises a plurality of information cells, wherein each information cell comprises one or more values indicative of one or more geometric properties of the simulated workpiece, an amount or thickness of simulated paint deposited on a region of the simulated workpiece, a fluidity of the paint deposited on a region of the simulated workpiece, and/or a direction, sense and/or modulus of a speed vector associated with displacement of the paint deposited on the surface of the simulated workpiece. More preferably, the mapping of the data matrix along the surfaces of the simulated workpiece is a mapping such that each parameterisation point or region of the surfaces of the simulated workpiece corresponds to a single information cell of the data matrix.

Even more preferably, the parameterisation comprises mapping a plurality of data matrices, and/or a data matrix of n dimensions along the surfaces of the simulated workpiece, wherein the information in the information cells of said matrices has a different resolution between at least two of the data matrices, and/or between at least two dimensions of one or more of the data matrices.

In another preferred embodiment of the invention, the simulation method further comprises performing, with the paint spray calculator, a step of verifying conservation of the mass of the simulated paint generated by the simulated painting tool, in relation to the simulated paint deposited on the simulated workpiece. More preferably, the step of calculating, with the paint spray calculator, a paint projection surface on the simulated workpiece comprises determining one or more paint loss areas where the verification of mass conservation is not fulfilled.

In another preferred embodiment of the invention, the step of determining, with the paint spray calculator, the shape and volume of the paint coating based on the input parameters for each of the layers of paint material comprises determining a value, a property or a probability of transfer of the paint deposited on the simulated workpiece. More preferably, the value, property or probability of transfer of the paint is determined based on an angle of incidence of the simulated paint on the simulated workpiece, the distance between the simulated painting tool and the simulated workpiece, and/or an impact speed of the simulated paint on the simulated workpiece.

In another preferred embodiment of the invention, the step of determining, with the paint spray calculator, the shape and volume of the paint coating based on the input parameters for each of the layers of paint material comprises generating one or more drying patterns of paint deposited on the simulated workpiece.

In another preferred embodiment of the invention, one or more of the input parameters comprise the type of painting process, and wherein said type of painting process comprises:
- spray painting with compressed air;
- spray painting with low-pressure compressed air;
- airless spray painting.

A second object of the invention relates to a computer program adapted to implement, in simulation equipment, a method according to any of the embodiments described herein.

A third object of the invention relates to a system for simulating a spray-painting operation, wherein said painting operation represents the application of one or more layers of paint material on a physical workpiece, and wherein said layers of paint material form a paint coating;
wherein said system comprises:
   - a physical tool operable by a user;
   - at least one position detector, adapted to receive information corresponding to the position and orientation of the physical workpiece and the physical tool; and
   - simulation equipment connected to the physical tool and to the position detector;
wherein said simulation equipment is adapted with hardware and software means comprising a parametriser, a paint spray calculator, a renderer and a display;
wherein, advantageously, the hardware and/or software means of the simulation equipment are adapted to perform the steps of a method according to any of the embodiments described herein.

In a preferred embodiment of the system of the invention, the physical tool comprises:
- a real painting tool, and/or
- a training painting tool.

In another preferred embodiment of the system of the invention, the physical tool comprises a robotic arm.

In another preferred embodiment of the invention, the system comprises:
- at least one position indicator for a physical workpiece and/or for the physical tool and, additionally,
- wherein the position detector is adapted to receive information corresponding to the position of the workpiece and/or the physical tool by means of the position indicator.

In another preferred embodiment of the system of the invention, the position indicator comprises one or more of the following: optical markers, printed markers and/or natural markers.

In another preferred embodiment of the system of the invention, the position detector comprises one or more of the following: cameras, depth cameras, inertial sensors, haptic sensors, thermal sensors, mechanical sensors, electromagnetic sensors and laser sensors.

### DESCRIPTION OF THE DRAWINGS

The features, aspects and advantages of the present invention will be understood in greater detail from the detailed description provided below with reference to the attached drawings in which similar characters represent similar parts in all the figures, in which:
Figure 1 shows a perspective view of the main elements simulated with the method of the invention, in a preferred embodiment thereof, showing a simulated paint coating formed by three simulated layers of material (distinguished in the figure by three filler patterns), wherein said simulated paint coating is deposited on a simulated workpiece by means of a simulated painting tool which, for said embodiment, represents a compressed air paint gun.
Figure 2 schematically represents the main elements of the simulation equipment of the invention in a preferred embodiment thereof.
Figure 3 shows a physical workpiece and a physical tool according to a preferred embodiment of the invention, wherein said physical workpiece and said physical tool comprise position indicators that can be detected by the position detector.
Figure 4 shows a perspective view of the paint coating obtained from the method of the invention, wherein a projection surface is determined as the intersection between the simulated paint emission cone or fan and the surface of the simulated workpiece.
Figure 5 illustrates, by way of example, the formation of paint accumulation regions on the paint projection surface on the simulated workpiece, according to a preferred embodiment of the invention.
Figure 6 illustrates a preferred embodiment of the invention, showing a paint coating comprising a roughness and drip pattern of paint deposited on the simulated workpiece.
Figure 7 illustrates a preferred embodiment of the invention, showing an example of correcting the shape and/or position of the paint projection surface by the effect of gravity in the three-dimensional space.
Figure 8 illustrates a preferred embodiment of the invention, showing an example of correcting the shape and/or position of the paint projection surface, and wherein said correction comprises determining one or more occlusion regions on the simulated workpiece.
Figure 9 illustrates a preferred embodiment of the invention, showing an example of correcting the shape and/or position of the paint projection surface, and comprising determining one or more occlusion regions on the simulated workpiece, due to the existence of one or more virtual objects arranged between the simulated workpiece and the simulated painting tool, or belonging to the simulated workpiece itself.

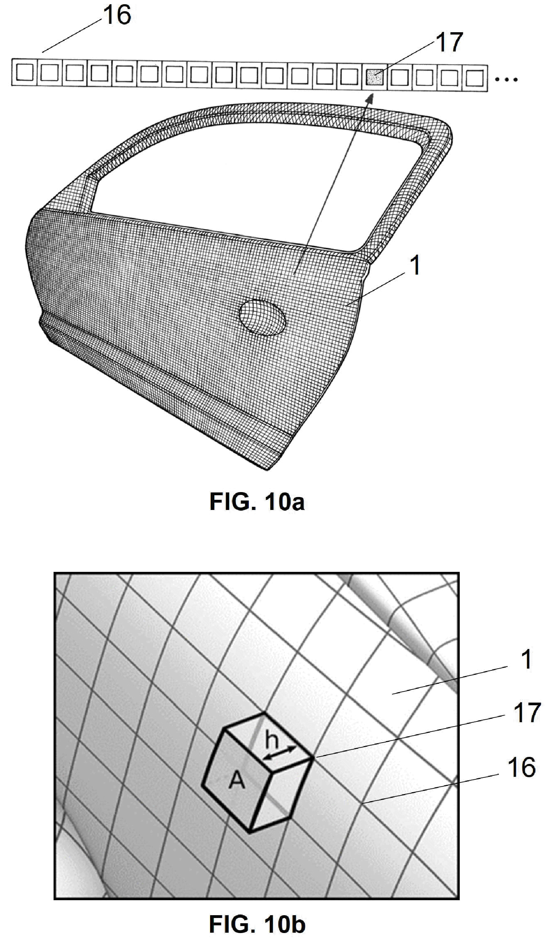

Figures 10a-10b illustrate a preferred embodiment of the invention, wherein the surface of the simulated workpiece is parametrised by the mapping of a data matrix (Fig. 10a), and wherein said data matrix comprises a plurality of information cells. Each information cell further comprises one or more values indicative of one or more geometric properties of the simulated workpiece, an amount or thickness of simulated paint deposited on a region of the simulated workpiece, a fluidity of the paint deposited on a region of the simulated workpiece, and/or a direction, sense and/or modulus of a speed vector associated with displacement of the paint deposited on the surface of the simulated workpiece (Fig. 10b).
Figures 11-12 illustrate a preferred embodiment of the invention, wherein the surface of the simulated workpiece is parametrised by the mapping of a data matrix with triangular cells (Fig. 11), and wherein said data matrix is shown with three different aggregation densities of simulated paint particles (Figs. 12a-12c), corresponding respectively to a density of 20 particles, 100 particles and 1000 particles per cell.

### Reference numbers used in the description

- (1): Simulated workpiece
- (1'): Physical workpiece
- (2): Simulated painting tool
- (2'): Physical tool
- (3): Simulated layers of paint material
- (4): Simulated paint coating
- (5): Simulation equipment
- (6): Paint parameter configurer
- (7): Paint spray calculator
- (8): Renderer
- (9): Display
- (10): Position detector
- (11): Position indicators
- (12): Paint projection surface
- (13): Paint accumulation region
- (14): Occlusion region
- (15): Virtual object
- (16): Data matrix
- (17): Information cell of the data matrix
- (18): Paint particles generated in the cell

### DETAILED DESCRIPTION OF THE INVENTION

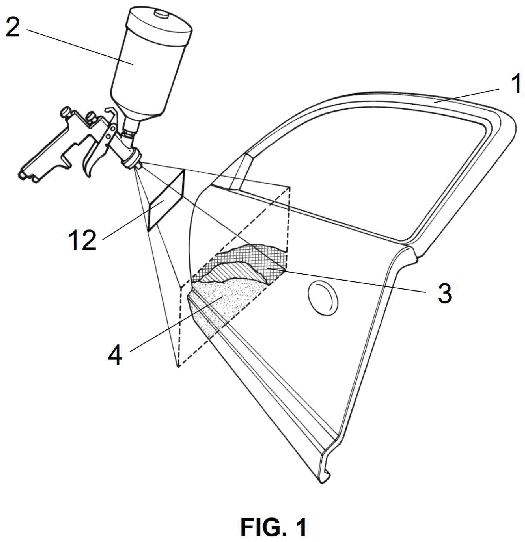

Figures 1-10 herein describe a number of preferred embodiments of the invention, which are incorporated for illustrative and, therefore, non-limiting purposes of the scope of protection of the claims.

As described in the previous sections, a first object of the invention relates to a method for simulating a painting operation, wherein said simulation is preferably performed in an augmented reality, virtual reality or mixed reality environment. **In** this environment, as shown in Figure 1, the simulated painting operation preferably represents the application of a simulated paint material on a simulated workpiece (1), wherein the mentioned application of material is performed by a simulated painting tool (2) (wherein said tool (2) may be, for example, either a simulated low or high pressure spray gun with compressed air, a simulated airless spray gun, a simulated robotic painting arm, etc.). With this representation, the simulated paint material is deposited as one or more layers (3) (understood to mean substantially surface extensions of simulated paint material, which can be arranged on top of one another, completely or partially overlapping on one another as they are generated on the piece (1)), and wherein the assembly formed by said simulated layers (3) forms a simulated paint coating (4). Therefore, the simulated layers (3) represent the passes of material that typically form the real paint coatings on the real pieces.

Depending on whether the application of the invention refers to virtual, augmented or mixed reality, certain elements simulated through the described method (for example, the simulated workpiece (1), the simulated painting tool (2), etc.) can be generated in relation to corresponding real elements, such as a physical workpiece (1') or a physical tool (2'), where the latter can be, in different embodiments, a real painting tool (i.e., adapted for the deposition of real paint material) or a training tool (having dimensions, weight, or other properties that are similar to those of a real painting tool, but without the capability of depositing real paint material). The physical tool (2') can be operated by a human, robotic or computerised user, both directly or indirectly, based on a corresponding interface or control means.

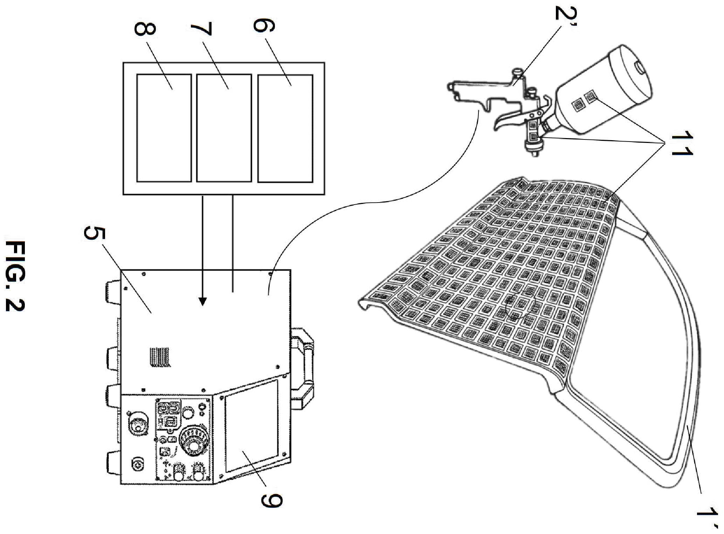

Thus, by way of non-limiting example, in an augmented reality environment, the method of the invention may comprise the representation of a simulated workpiece (1) and a simulated painting tool (2) on a physical workpiece (1') and a physical tool (2'), respectively (said physical elements are represented in Figure 2 herein). As previously mentioned, in different embodiments of the invention, a physical workpiece (1') can be understood to mean an industrial part, a vehicle, a constructive element, an engineering element, or a part thereof, on which the painting operation and/or the corresponding simulation thereof is to be performed.

In a preferred embodiment of the invention, as illustrated in Figure 2, the method of the invention comprises the operation of simulation equipment (5), wherein said simulation equipment (5) is adapted with hardware and software means comprising a paint parameter configurer (6), a paint spray calculator (7), a renderer (8), and a display (9). The hardware and/or software means comprising the parameterisation configurer (6), the paint spray calculator (7), the renderer (8) or the display (9) are preferably implementable as computer routines or algorithms or, in general, any computing means. While in a preferred embodiment of the invention said simulation equipment (5) can be used connected to a physical tool (2'), in other embodiments it can be used independently of said tool (2'). In general, however, the simulation equipment (5) will be adapted to receive information obtained from the operation of the aforementioned physical tool (2'), for example based on its interaction with a human, robotic, or computerised user, and/or with a physical workpiece (1'), which generates data relative to the simulated painting operation that can be parameterised by the configurer (6). In different embodiments of the invention, the connection between the simulation equipment (5) and the physical tool (2') can be produced by means of a material connection (for example, through a cable and/or information port) or wirelessly, and both directly and through intermediate elements, adapted for the exchange of said data between the simulation equipment (5) and the physical tool (2''), or to provide information of one with respect to the other.

Typically, the simulation equipment (5) may comprise any type of computer or a mobile device (for example, a mobile telephone, a tablet, etc.). Moreover, as mentioned, the paint parameter configurer (6) is adapted to receive and process information relative to one or more of the following parameters relative to the material or type of paint: composition of deposited paint, type of painting process, paint and/or air outlet flow, paint outlet fan opening. Thus, the simulations of the painting operations are mainly based on the input information that the simulation equipment (5) receives about the properties of the paint material or the type of simulated painting technique, according to the aforementioned parameters. Likewise, in different embodiments of the invention, the input information can be generated in an artificial manner (for example, by means of simulation parameterisations, neural networks, artificial intelligence tools) or in a real manner, through the analysis of information corresponding to the deposition of a real paint material, for example and in a non-limiting manner, by means of the analysis of the properties of the shape, volume, or composition of a real paint coating (4) deposited, successively in one or several layers, on a physical workpiece (1').

In other preferred embodiments of the invention, other parameters detected by the configurer (6) may comprise information relative to the position or the movement of the physical tool (1') (such as, for example, the working angle, the angle of displacement, the rate of displacement, or the working distance existing between the physical tool (1') and the physical workpiece (2')), and/or the corresponding simulated elements thereof.

The paint spray calculator (7) is configured, in turn, to calculate the shape and volume of the paint coating (4) based on the input paint parameters processed by the configurer (6). Preferably, said calculation is performed for each layer (3) of simulated paint material.

The renderer (8) is configured to generate information of realistic or photorealistic images based on two-dimensional (2D) or three-dimensional (3D) models in a simulation environment. 2D or 3D model-based rendering techniques are generally known in the prior art.

The display (9) is configured to represent and display the information of images generated by the renderer (8). To that end, in different embodiments of the invention, the display (9) may comprise a monitor or a screen, which is optionally a touch screen. In other embodiments of the invention, the display (9) may be integrated into a painting mask or helmet adapted to be worn by the user of the simulation equipment (5), or integrated into the physical workpiece (1') itself.

The simulation equipment (5) is preferably communicatively connected (either wired or wirelessly) to a position detector (10), adapted to receive information corresponding to the position and orientation of the physical workpiece (1') and/or the physical tool (2'). Said position detector (10) may comprise, by way of non-limiting example, one or more cameras and/or, in other embodiments, other detection means such as inertial sensors (with which it is also possible to infer the position/orientation of the physical workpiece (1') and/or the physical tool (2') with respect to the direction and sense of the force of gravity), haptic sensors, thermal sensors, mechanical sensors, electromagnetic sensors, etc. Thus, in general, the method of the invention comprises:
- obtaining, with the position detector (10), information corresponding to the spatial location of the physical workpiece (1') and the physical tool (2'), and sending this spatial location information to the simulation equipment (5); and/or
- calculating, with the position detector (10) and/or the simulation equipment (5), the position and orientation of the physical workpiece (1') and the physical tool (2') from the information obtained by the position detector (10);

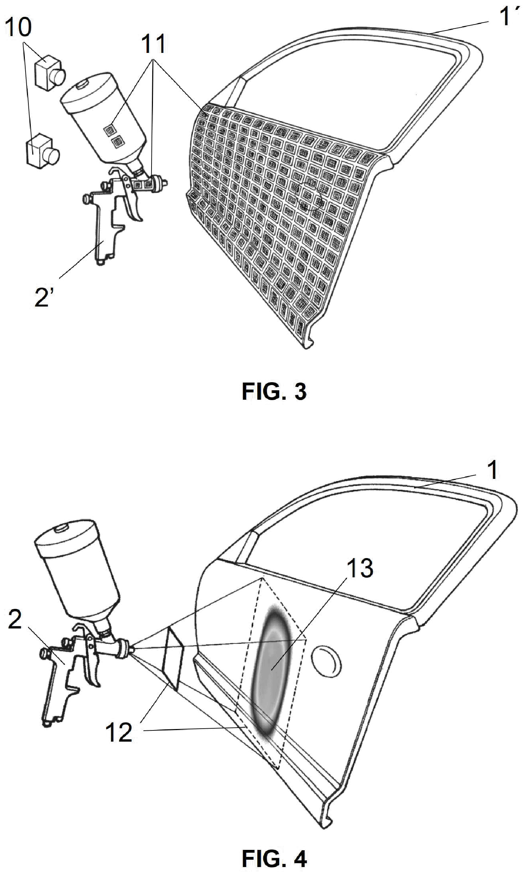

Likewise, in a preferred embodiment of the invention, the simulation method comprises the operation of a physical workpiece (1') and/or a physical tool (2'), wherein said workpiece (1') and/or said tool (2') comprise one or more position indicators (11) (see Figure 3), which can be detected by the position detector (10). The position indicators (11) may comprise, for example, optical markers such as LEDs, QR codes, barcodes, retroreflective spheres, and/or printed markers; as well as natural markers such as characteristic points of the workpiece (1') and/or the tool (2') (for example, the corners of said elements can be used as characteristic points, without the need to have external marking or identification elements on the same). The use of natural markers also includes techniques based on SLAM (Simultaneous Localisation And Mapping). Alternatively, it is also possible to use artificial intelligence or machine learning techniques, e.g., using neural networks, wherein the acquired and/or generated images are obtained by comparison or calculation based on a supervised or unsupervised training data set. In these cases, the use of position indicators (11) is not essential to the invention.

In this embodiment, based on position indicators (11), the method of the invention further comprises performing the following steps:
- obtaining, with the detector (10), information corresponding to the location of the physical workpiece (1') and/or the physical tool (2') by means of the identification of the position indicators (11);
- determining, with the detector (10), the position and orientation of the physical workpiece (1') and/or the physical tool (2') by obtaining information about at least one of the following elements: a part of the physical workpiece (1') and/or the physical tool (2') which are visible in a field of view; the distance between the detector (10) and the physical workpiece (1') and/or the physical tool (2'), the location and orientation of the physical tool (2') in relation to the physical workpiece (1'); the orientation of the physical workpiece (1') based on the information from the detector (16); and
- representing, with the display (9), the simulation domain based on the mapping of the position indicators (11) to positions on a simulated workpiece (1) and/or a simulated painting tool (2).

According to the preceding method, the step of determining, with the detector (10), the position and orientation of the physical workpiece (1') and/or the physical tool (2') preferably comprises obtaining information about at least one of the following: working angle, angle of displacement, rate of displacement, working distance between the physical workpiece (1') and/or the physical tool (2').

For any of the different preferred embodiments described above, the method of the invention comprises performing, with the simulation equipment (5), the following steps, in any technically possible order:
i) Establishing, with the paint configurer (6), one or more input paint parameters that characterise the operation performed by a user with the physical tool (2'), wherein said parameters comprise at least one of the following: composition of deposited paint, type of painting process, paint and/or air outlet flow, paint outlet fan opening.
ii) Rendering, with the renderer (8), at least one simulation domain in which the simulated paint coating (4) is represented in a three-dimensional painting space, and at least one of a simulated workpiece (1) and a simulated painting tool (2) representing, respectively, the physical workpiece (1') and the physical tool (2') within the aforementioned three-dimensional painting space.

Advantageously, the method of the invention essentially comprises the following additional steps:
iii) Calculating, with the paint spray calculator (7), a paint projection surface (12) on the simulated workpiece (1), based on the position and orientation of the physical workpiece (1') and the physical tool (2'), as well as based on the input parameters for each layer (3). Typically, the projection surface (12) will be determined as the intersection between the simulated paint emission cone or fan and the surface of the simulated workpiece (1) (Figure 4), while in different embodiments of the invention, it can be calculated in relation to or from the perspective of the simulated workpiece (1), or in relation to or from the perspective of the simulated painting tool (2), in terms of both surface and volume. Preferably in the invention, the paint projection surface (12) is configured as one or more paint accumulation regions (13), where said accumulation regions (13) are determined, with the paint spray calculator (7), based on the paint and/or air outlet flow established with the paint parameter configurer (6).
iv) Determining, with the paint spray calculator (7), the shape and volume of the paint coating (4) based on the input paint parameters, wherein said shape and said volume are calculated as functions of depositing paint material on the one or more interconnected paint projection surfaces (12) which, as a whole, form the paint coating (4).
v) Rendering, with the renderer (8), the paint coating (4) in the simulation domain and/or representing, with the display (9), the simulated workpiece (1), the simulated painting tool (2) and the rendered paint coating (4).

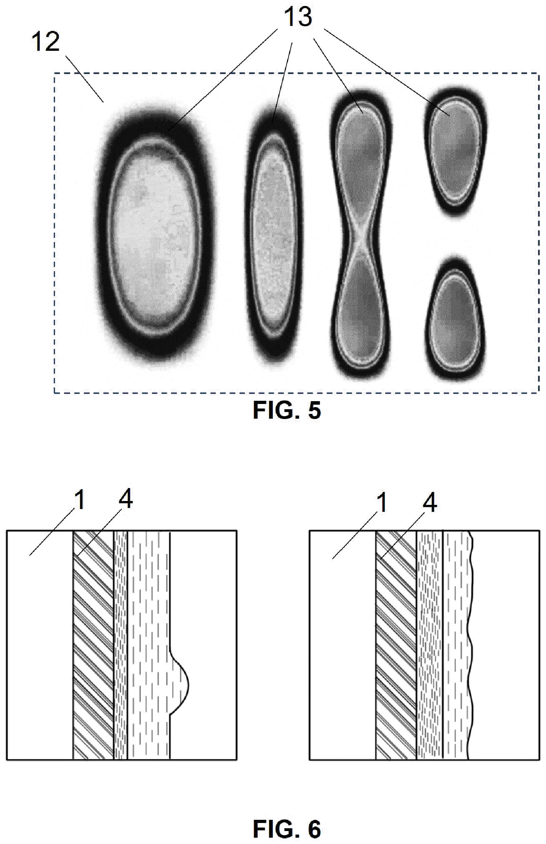

As previously described, the paint projection surface (12) is configured, advantageously in the invention, as one or more paint accumulation regions (13), where said accumulation regions (13) are determined, with the paint spray calculator (7), based on the paint and/or air outlet flow established with the paint parameter configurer (6). The paint accumulation regions (13) correspond, in real spray-painting operations, to the deposition patterns that are configured based on the regulation of air pressure or the paint itself in a real painting tool. Thus, when said pressure is properly regulated, the deposition pattern will ideally have a substantially elliptical shape. However, when the outlet pressure of the air or the paint itself is excessive in the nozzle, the elliptical pattern is modified, generally becoming a pattern with two paint accumulation regions (13). This situation is depicted in Figure 5 in different configurations. In a novel way, the present invention takes into account the effect of the pressure and air and/or paint outlet flow to realistically simulate the patterns of the aforementioned accumulation regions (13).

In another preferred embodiment of the invention, in the step of determining, with the paint spray calculator (7), the shape and volume of the paint coating (4) based on the input parameters, the functions of depositing paint material are globally or locally decreasing functions based on the centres of the accumulation regions (13). In this context, "globally or locally" will be understood to be corresponding to the substantially central region of the paint projection surface (12) as a whole, or to the centre of the accumulation regions (13).

In another preferred embodiment of the invention, the step of determining, with the paint spray calculator (7), the shape and volume of the paint coating (4) based on the input parameters for each of the layers (3) of paint material comprises generating one or more paint dispersion patterns. In this context, the dispersion pattern will be understood to be the effect of the distance existing between the simulated workpiece (1) and the simulated tool (2) on the paint dispersion when the paint reaches the simulated workpiece (1). Thus, as the distance increases, the dispersion will be greater with respect to the global or local centres of the paint projection surface (12).

In another preferred embodiment of the invention, the step of determining, with the paint spray calculator (7), the shape and volume of the paint coating (4) based on the input parameters for each of the layers (3) of paint material comprises generating one or more roughness, drip and/or displacement patterns of paint deposited on the simulated workpiece (1) (see Figure 6). By means of this effect, it is possible to achieve a much more realistic visual effect on the coating (4) finally generated in the simulated painting operations. In general, techniques for implementing roughness or drip textures are known in the field of computer-implemented graphics engines, although they are considered to be novel in terms of their application to the specific field of the invention.

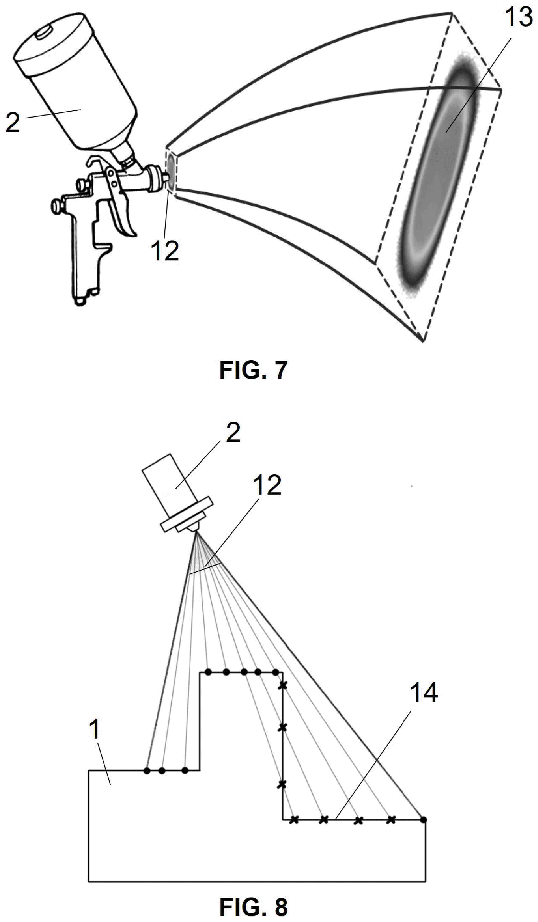

In another preferred embodiment of the invention, the step of calculating, with the paint spray calculator (7), a paint projection surface (12) on the simulated workpiece (1), based on the position and orientation of the physical workpiece (1') and the physical tool (2') comprises correcting the shape and/or position of said projection surface (12) by the effect of gravity, by the effect of turbulence, by the effect of resistance or drag of air molecules, by the effect of temperature and/or ambient humidity, and/or by acceleration due to an air flow in one or more directions in the three-dimensional space. An example of this correction is shown in Figure 7, where it shows how the trajectories of the simulated paint emission cone are curved by the effect of gravity, affecting the position of the paint projection surface (12) on the simulated workpiece (1).

In another preferred embodiment of the invention, the step of calculating, with the paint spray calculator (7), a paint projection surface (12) on the simulated workpiece (1), based on the position and orientation of the physical workpiece (1') and the physical tool (2') comprises one or more corrections determined on the basis of the shape of the simulated workpiece (1). More preferably, said corrections comprise determining one or more occlusion regions (14) in the simulated workpiece (1), as shown by way of example in Figure 8. In general, techniques for implementing occlusion regions (14) are known in the field of computer-implemented graphics engines, although they are considered to be novel in terms of their application to the specific field of the invention.

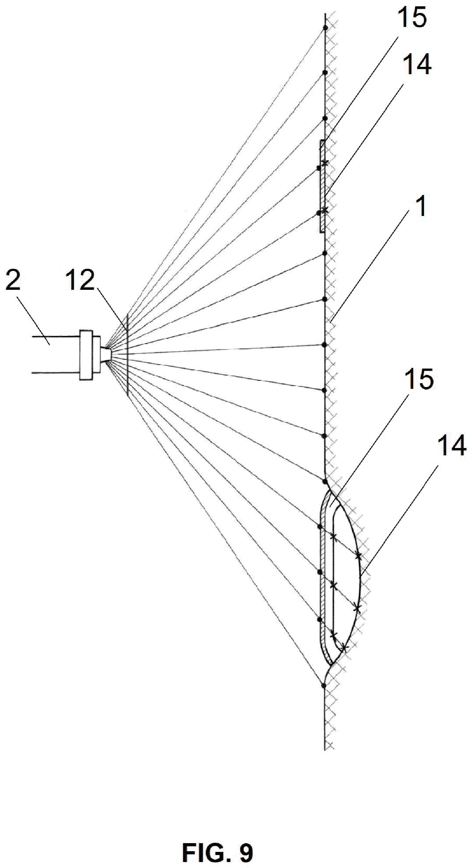

In another more preferred embodiment of the invention as described in the preceding paragraph, the step of calculating, with the paint spray calculator (7), a paint projection surface (12) on the simulated workpiece (1), based on the position and orientation of the physical workpiece (1') and the physical tool (2') comprises determining one or more occlusion regions (14) in the simulated workpiece (1) due to the existence of one or more virtual objects (15) arranged between the simulated workpiece (1) and the simulated painting tool (2) and/or arranged on the simulated workpiece (1) itself (see Figure 9). In automotive part painting simulation techniques, said occlusion regions (14) may be generated, for example, by the presence of simulated adhesive tape arranged on the workpiece (1), one or more gripping elements of said simulated workpiece (1), elements present on the simulated workpiece (1) itself, such as a door handle or door opening lever, etc.

In another preferred embodiment of the invention, the simulation method comprises performing, with the configurer (6), a step of parameterising one or more surfaces of the simulated workpiece (1), wherein said parameterisation comprises mapping (see Figure 10) a data matrix (16) along said surfaces of the simulated workpiece (1), and wherein said data matrix (16) comprises a plurality of information cells (17), wherein each information cell (17) comprises one or more values indicative of one or more geometric properties of the simulated workpiece (1), an amount or thickness of simulated paint deposited on a region of the simulated workpiece (1), a fluidity of the paint deposited on a region of the simulated workpiece (1), and/or a direction, sense and/or modulus of a speed vector associated with displacement of the paint deposited on the surface of the simulated workpiece (1). In a preferred embodiment of the invention, the direction, sense and/or modulus of the speed vector of the deposited paint is calculated based on a simulation of the effect of the gravity force applied to the paint on the surface of the simulated workpiece (1) along the data matrix (16). More preferably, the mapping of the data matrix (16) along the surfaces of the simulated workpiece (1) is a mapping such that each parameterisation point or region of the surfaces of the simulated workpiece (1) corresponds to a single information cell (17) of the data matrix (16). Even more preferably, the parameterisation comprises mapping a plurality of data matrices (16), and/or a data matrix (16) of n dimensions along the surfaces of the simulated workpiece (1), wherein the information in the information cells (17) of said matrices (16) has a different resolution between at least two of the data matrices (16), and/or between at least two dimensions of one or more of the data matrices (16).

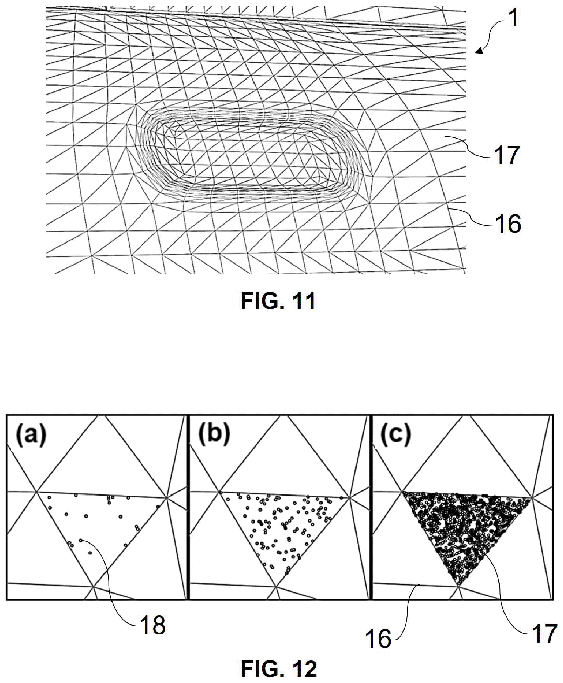

As shown in Figures 10a-10b, the cells (17) of the data matrix (16) may have a square shape. However, in other preferred embodiments of the invention, said cells (17) may adopt other types of shapes, generally polygonal, such as triangular, hexagonal, etc. Thus, for example, Figure 11 herein shows a surface of the simulated workpiece (1), mapped by means of a data matrix (16) of triangular cells (17) (Fig. 11). In other embodiments, it is also possible to combine different types of cell (17) shapes/sizes in the same mapping, as deemed more appropriate for improved calculations and/or rendering simulations. More preferably, the mapping follows a method of microgeometry of the piece (1), i.e., a reduction of the 3D area of the mapping to a set of smaller geometric units, until the appropriate resolution for the simulation is reached. The method of microgeometry avoids possible problems of discontinuity of textures, as well as the appearance of texels (texture pixels) that may be split, changing their shape and area and making it difficult to determine the continuity of the paint between cells (17), or regions thereof, mainly for the movement or displacement of the paint on the surface of the piece (1).

In the present invention, once the tessellation of the piece (1) has been carried out and the level of detail required for the simulation has been reached, there are two possible preferred ways of rendering the paint on the piece (1), although without limitation to other techniques:
a) Discretised mode: in this mode it is assumed that the geometric discretisation generated is sufficient for the paint movement jumps to be made adequately from one geometric element to the next, where the accuracy errors that may be generated are assumed to be below a certain error threshold (since, although small, the jump between cells (17) will be discrete). This mode is generally faster than others, albeit at the cost of minor quality losses and the generation of the occasional visual artifact.
b) Use of particles (18): this mode involves generating particles (18) directly on the surface of the piece (1) in the regions where paint deposition occurs and preferably using the barycentric coordinates of the cells (17) (whatever their shape or size) where deposition occurs. In this way, each particle (18) is unequivocally bound to the surface of the piece (1) in its corresponding cell (17), and subsequently one or more physics (understood as effects of displacement of the particles (18) by sliding, gravity, dripping, accumulation, etc.) are applied to generate their movement and, consequently, the final appearance of the paint deposited on the piece (1). More preferably, said physics can be applied by considering the cells (17) as flat surfaces (for example, in the case of the triangles shown in Figures 11 and 12) and allowing the particles (18) to move within or between the cells (17), depending on how it is more appropriate for the simulation results to be obtained.

Depending on the requirements or the calculating capability of the renderer (8), it is possible to populate the cells (17) with different amounts of simulated paint particles (18). By way of example, Figures 12a-12c show cells (17) with three aggregation densities of particles (18) corresponding, respectively, to twenty particles, one hundred particles and one thousand particles. Likewise, as the particles (18) move over the surface of the cells (17), said cells can act as local containers for the particles (18), thus speeding up the particle interaction calculations and thus avoiding the need to use a higher level of detail of the microgeometry.

Moreover, the physics calculation by treating the cells (17) as non-flat surfaces, or when the rendering is calculated in three dimensions (i.e., when the physics calculation is performed in real 3D), can also be incorporated when the particles (18) reach some geometric boundary (for example, an edge of the piece (1)) and accumulate therein, or when they lose their cohesive capacity, for example, when they become detached by gravity. In these cases, the particles (18) are detached from the surface of the piece (1), their physics being treated independently of the deposited paint.

In another preferred embodiment of the invention, in order to keep the number of particles (18) in each cell (17) stable during paint deposition, it is possible to set minimum and maximum radii of said particles (18). In this way, when a number of particles (18) overlap in the same area of the cell (17), they merge, reducing the total number of particles (18) and sharing or combining their properties (for example, by adjusting their radius, which will range between the minimum and maximum set values).

In another preferred embodiment of the invention, the simulation method further comprises the step of performing, with the paint spray calculator (7), a step of verifying conservation of the mass of the simulated paint generated by the simulated painting tool (2), in relation to the simulated paint deposited on the simulated workpiece (1). More preferably, the step of calculating, with the paint spray calculator (7), a paint projection surface (12) on the simulated workpiece (1) comprises determining one or more paint loss areas on said projection surface (12), wherein the verification of mass conservation is not fulfilled.

In another preferred embodiment of the invention, the step of determining, with the paint spray calculator (7), the shape and volume of the paint coating (4) based on the input parameters for each of the layers (3) of paint material comprises determining a value, a property or a probability of transfer of the paint deposited on the simulated workpiece (1). Even more preferably, the value, property or probability of transfer of the paint is determined based on an angle of incidence of the simulated paint on the simulated workpiece (1), the distance between the simulated painting tool (2) and the simulated workpiece (1), and/or an impact speed of the simulated paint on the simulated workpiece (1).

In another preferred embodiment of the invention, the step of determining, with the paint spray calculator (7), the shape and volume of the paint coating (4) based on the input parameters for each of the layers (3) of paint material comprises generating one or more drying patterns of paint deposited on the simulated workpiece (1). In general, techniques for implementing drying textures are known in the field of computer-implemented graphics engines, although they are considered to be novel in terms of their application to the specific field of the invention.

Lastly, as previously described herein, the method of the invention can be applied to the simulation of any spray-painting technique, such as
- spray painting with compressed air;
- spray painting with low-pressure compressed air; or
- airless spray painting.

A second object of the invention relates to a computer program adapted to implement, in simulation equipment (5), a method according to any of the embodiments described herein.

A third object of the invention relates to a system for simulating a spray-painting operation, wherein said painting operation represents the application of one or more layers (3) of paint material on a physical workpiece (1'), and wherein said layers (3) of paint material form a paint coating (4);
wherein said system comprises:
   - a physical tool (2') operable by a user;
   - at least one position detector (10), adapted to receive information corresponding to the position and orientation of the physical workpiece (1') and the physical tool (2'); and
   - simulation equipment (5) connected to the physical tool (2') and to the position detector (10);
wherein said simulation equipment (5) is adapted with hardware and software means comprising a parameterisation configurer (6), a paint spray calculator (7), a renderer (8) and a display (9); and wherein the hardware and/or software means of the simulation equipment (5) are adapted to perform the steps of a simulation method according to any of the embodiments described herein.

In a preferred embodiment of the invention, the physical tool (2') comprises a real painting tool and/or a training painting tool. More preferably, the physical tool (2') may comprise or be connected to a robotic arm.

In a preferred embodiment of the invention, the system comprises:
- at least one position indicator (11) for a physical workpiece (1') and/or for the physical tool (2') and, additionally,
- wherein the position detector (10) is adapted to receive information corresponding to the position of the physical workpiece (1') and/or the physical tool (2') by means of the position indicator (11). More preferably, the position indicator (11) comprises optical markers, printed markers and/or natural markers. Likewise, the position detector (10) may comprise cameras, inertial sensors, haptic sensors, thermal sensors, mechanical sensors, and/or electromagnetic sensors.

## Claims

1. A method for simulating a spray-painting operation, wherein said painting operation represents the application of one or more layers (3) of paint material on a physical workpiece (1'), and wherein said layers (3) of paint material form a paint coating (4);
wherein said method comprises the operation of:
- a physical tool (2') operable by a user;
- at least one position detector (10), adapted to receive information corresponding to the position and orientation of the physical workpiece (1') and/or the physical tool (2'); and
- simulation equipment (5) connected to the physical tool (2') and to the position detector (10);
wherein said simulation equipment (5) is adapted with hardware and software means comprising a paint parameter configurer (6), a paint spray calculator (7), a renderer and a display (9);
wherein said method comprises performing the following steps:
- obtaining, with the position detector (10), information corresponding to the spatial location of the physical workpiece (1') and the physical tool (2'), and sending this spatial location information to the simulation equipment (5);
- calculating, with the position detector (10) and/or the simulation equipment (5), the position and orientation of the physical workpiece (1') and the physical tool (2') from the information obtained by the position detector (10);
- establishing, with the paint parameter configurer (6), one or more input parameters that characterise a painting operation for one or more layers (3) of paint material, wherein said input parameters comprise at least one of the following: composition of the deposited paint material, type of painting process, paint and/or air outlet flow, outlet fan opening of the deposited paint;
- rendering, with the renderer (8), at least one simulation domain in which a simulated workpiece (1) and a simulated painting tool (2) representing, respectively, the physical workpiece (1') and the physical tool (2') are represented within a three-dimensional painting space;
and wherein the method is **characterised in that** it further comprises the following steps:
- calculating, with the paint spray calculator (7), one or more paint accumulation regions (13), and where said accumulation regions (13) are determined, with the paint spray calculator (7), based on the paint and/or air outlet flow established with the paint parameter configurer (6);
- determining, with the paint spray calculator (7), the shape and volume of the paint coating (4) based on the input paint parameters;
- rendering, with the renderer (8), the paint coating (4) in the simulation domain;
- representing, with the display (9), the simulated workpiece (1), the simulated painting tool (2) and the rendered paint coating (4).

2. The method according to the preceding claim, wherein:
- the paint accumulation regions (13) are determined by a paint projection surface (12) on the simulated workpiece (1), obtained based on the position and orientation of the physical workpiece (1') and/or the physical tool (2'), as well as based on the input parameters for each layer (3); and
- the shape and volume of the paint coating (4) are calculated as functions of depositing paint material on the one or more accumulation regions (13) of the paint projection surface (12) which, for the applied layers (3) as a whole, form the paint coating (4).

3. The method according to any of the preceding claims, wherein, in the step of determining, with the paint spray calculator (7), the shape and volume of the paint coating (4) based on the input parameters, the functions of depositing paint material are globally or locally decreasing functions based on the centres of the paint accumulation regions (13).

4. The method according to any of the preceding claims, wherein the step of determining, with the paint spray calculator (7), the shape and volume of the paint coating (4) based on the input parameters for each of the layers (3) of paint material comprises generating one or more paint dispersion patterns.

5. The method according to any of the preceding claims, wherein the step of determining, with the paint spray calculator (7), the shape and volume of the paint coating (4) based on the input parameters for each of the layers (3) of paint material comprises generating one or more roughness, drip and/or displacement patterns of paint deposited on the simulated workpiece (1).

6. The method according to any of the preceding claims, wherein the step of determining, with the paint spray calculator (7), the shape and volume of the paint coating (4) based on the input parameters for each of the layers (3) of paint material comprises calculating one or more indicators relating to the properties of the paint deposited on the simulated workpiece (1), said indicators comprising one or more of the following: time used during the painting operation, efficiency of the transfer of deposited material, consumption of paint material, presence of defects.

7. The method according to any of claims 2-6, wherein the step of calculating, with the paint spray calculator (7), a paint projection surface (12) on the simulated workpiece (1), based on the position and orientation of the physical workpiece (1') and the physical tool (2') comprises correcting the shape and/or position of said projection surface (12) by the effect of gravity, by the effect of turbulence, by the effect of resistance or drag of air molecules, by the effect of temperature and/or ambient humidity, and/or by acceleration due to an air flow in one or more directions in the three-dimensional space.

8. The method according to any of claims 2-7, wherein the step of calculating, with the paint spray calculator (7), a paint projection surface (12) on the simulated workpiece (1), based on the position and orientation of the physical workpiece (1') and the physical tool (2') comprises one or more corrections determined on the basis of the shape of the simulated workpiece (1).

9. The method according to the preceding claim, wherein the corrections determined on the basis of the shape of the simulated workpiece (1) comprise determining one or more occlusion regions in the simulated workpiece (1).

10. The method according to any of claims 2-9, wherein the step of calculating, with the paint spray calculator (7), a paint projection surface (12) on the simulated workpiece (1), based on the position and orientation of the physical workpiece (1') and the physical tool (2') comprises determining one or more occlusion regions (14) in the simulated workpiece (1) due to the existence of one or more virtual objects (15) arranged between the simulated workpiece (1) and the simulated painting tool (2) and/or arranged on the simulated workpiece (1) itself.

11. The method according to any of the preceding claims, further comprising performing, with the parametriser (6), a step of parameterising one or more surfaces of the simulated workpiece (1), wherein said parameterisation comprises mapping a data matrix (16) along said surfaces of the simulated workpiece (1), and wherein said data matrix (16) comprises a plurality of information cells (17), wherein each information cell (17) comprises one or more values indicative of one or more geometric properties of the simulated workpiece (1), an amount or thickness of simulated paint deposited on a region of the simulated workpiece (1), a fluidity of the paint deposited on a region of the simulated workpiece (1), and/or a direction, sense and/or modulus of a speed vector associated with displacement of the paint deposited on the surface of the simulated workpiece (1).

12. The method according to the preceding claim, wherein:
- one or more of the information cells (17) of the data matrix (16) are square, triangular, hexagonal or polygonal in shape; and/or wherein
- the information cells (17) of the matrix (16) have different types of cell (17) shapes and/or sizes.

13. The method according to any of claims 11-12, where the step of rendering, with the renderer (8), the paint coating (4) in the simulation domain comprises generating particles (18) directly on the surface of the piece (1) in the regions where paint deposition occurs, associating said particles to corresponding information cells (17).

14. The method according to the preceding claim, wherein one or more physics are applied to the deposited particles (18) to generate their movement and/or the final appearance of the paint deposited on the piece (1).

15. The method according to any of claims 13-14, wherein the cells (17) are populated with different amounts of simulated paint particles (18).

16. The method according to any of claims 13-15, wherein a minimum and/or maximum radius of the particles (18) in the cells (17) is established.

17. The method according to any of claims 11-16, wherein the cells (17) are flat.

18. The method according to any of claims 11-17, wherein the direction, sense and/or modulus of the speed vector of the deposited paint is calculated based on a simulation of the effect of the gravity force applied to the paint on the surface of the simulated workpiece (1) along the data matrix (16).

19. The method according to any of claims 11-18, wherein the mapping of the data matrix (16) along the surfaces of the simulated workpiece (1) is a mapping such that each parameterisation point or region of the surfaces of the simulated workpiece (1) corresponds to a single information cell (17) of the data matrix (16).

20. The method according to any of claims 11-19, wherein the parameterisation comprises mapping a plurality of data matrices (16), and/or a data matrix (16) of n dimensions along the surfaces of the simulated workpiece (1), wherein the information in the information cells (17) of said matrices (16) has a different resolution between at least two of the data matrices (16), and/or between at least two dimensions of one or more of the data matrices (16).

21. The method according to any of the preceding claims, further comprising performing, with the paint spray calculator (7), a step of verifying conservation of the mass of the simulated paint generated by the simulated painting tool (2), in relation to the simulated paint deposited on the simulated workpiece (1).

22. The method according to the preceding claim, wherein the step of calculating, with the paint spray calculator (7), a paint projection surface (12) on the simulated workpiece (1) comprises determining one or more paint loss areas where the verification of mass conservation is not fulfilled.

23. The method according to any of the preceding claims, wherein the step of determining, with the paint spray calculator (7), the shape and volume of the paint coating (4) based on the input parameters for each of the layers (3) of paint material comprises determining a value, a property or a probability of transfer of the paint deposited on the simulated workpiece (1).

24. The method according to the preceding claim, wherein the value, property or probability of transfer of the paint is determined based on an angle of incidence of the simulated paint on the simulated workpiece (1), the distance between the simulated painting tool (2) and the simulated workpiece (1), and/or an impact speed of the simulated paint on the simulated workpiece (1).

25. The method according to any of the preceding claims, wherein the step of determining, with the paint spray calculator (7), the shape and volume of the paint coating (4) based on the input parameters for each of the layers (3) of paint material comprises generating one or more drying patterns of paint deposited on the simulated workpiece (1).

26. The method according to any of the preceding claims, wherein one or more of the input parameters comprise the type of painting process, and wherein said type of painting process comprises:
- spray painting with compressed air;
- spray painting with low-pressure compressed air;
- airless spray painting.

27. A computer program adapted to implement, in simulation equipment (5), a method according to any of the preceding claims.

28. A system for simulating a spray-painting operation, wherein said painting operation represents the application of one or more layers (3) of paint material on a physical workpiece (1'), and wherein said layers (3) of paint material form a paint coating (3);
wherein said system comprises:
- a physical tool (2') operable by a user;
- at least one position detector (10), adapted to receive information corresponding to the position and orientation of the physical workpiece (1') and the physical tool (2'); and
- simulation equipment (5) connected to the physical tool (1') and to the position detector (10);
wherein said simulation equipment (5) is adapted with hardware and software means comprising a parametriser (6), a paint spray calculator (7), a renderer (8) and a display (9);
**characterised in that** the hardware and/or software means of the simulation equipment (5) are adapted to perform the steps of a method according to any of claims 1-26.

29. The system according to the preceding claim, wherein the physical tool (2') comprises:
- a real painting tool, and/or
- a training painting tool.

30. The system according to any of claims 28-29, wherein the physical tool (2') comprises a robotic arm.

31. The system according to any of claims 28-30, comprising:
- at least one position indicator (11) for a physical workpiece (1') and/or for the physical tool (2') and, additionally,
- wherein the position detector (10) is adapted to receive information corresponding to the position of the workpiece (1') and/or the physical tool (2') by means of the position indicator (11).

32. The system according to the preceding claim, wherein the position indicator (11) comprises one or more of the following: optical markers, printed markers and/or natural markers.

33. The system according to claims 28-32, wherein the position detector (10) comprises one or more of the following: cameras, depth cameras, inertial sensors, haptic sensors, thermal sensors, mechanical sensors, electromagnetic sensors and laser sensors.
